# EUROPEAN PATENT APPLICATION

(11) **EP 4 813 841 A1**
(43) Date of publication of application: **30.09.2026**
(21) Application number: 26162947.1
(22) Date of filing: 06.03.2026
(51) Int. Cl.: B64D 27/40

(54) **ASSEMBLY FOR AN AIRCRAFT**

(30) Priority: 27.03.2025 US 202563778847 P
(71) Applicant: Airbus Operations S.A.S., 31060 Toulouse (FR)
(72) Inventor: LAFONT, Laurent, 31060 TOULOUSE (FR)
(74) Representative: Cabinet Le Guen Maillet

(57) **Abstract**

Assembly (100) for aircraft, said assembly (100) having a vertical median plane (P) and comprising a pylon (18) having a front face (18a), a motor casing (16), a front link (20) mounted articulated on the front face (18a) by a central articulation point, and on the motor casing (16) by two lateral articulation points, two central links (22b) arranged on both sides of the vertical median plane (P) and each comprising a first end mounted articulated on the pylon (18) and a second end mounted articulated on the motor casing (16), and two rear links (24b) arranged on both sides of the vertical median plane (P) and each comprising a first end mounted articulated at a same articulation pin (27) of the pylon (18) and a second end mounted articulated on the motor casing (16), where the articulation pin (27) is arranged in the vertical median plane (P).

The proposed assembly is more compact

## Description

### TECHNICAL FIELD

The invention relates to an assembly for an aircraft and particularly to a mount system attached between a motor casing and a pylon. The invention relates also to an aircraft comprising at least one such assembly.

### RELATED ART

Conventional forward engine mounts that must handle loads impose significant design constraints on the pylon.

### SUMMARY OF THE INVENTION

The proposed assembly is more compact and the pylon box is simple and light.

It is proposed an assembly for aircraft, said assembly having a vertical median plane and comprising:
- a pylon having a front face,
- a motor casing,
- a front link where the front link is mounted articulated on the front face by a central articulation point arranged in the vertical median plane, and where the front link is mounted articulated on the motor casing by two lateral articulation points arranged on both sides of the vertical median plane,
- two central links arranged on both sides of the vertical median plane and each comprising a first end mounted articulated on the pylon and a second end mounted articulated on the motor casing, and
- two rear links arranged on both sides of the vertical median plane and each comprising a first end mounted articulated at a same articulation pin of the pylon and a second end mounted articulated on the motor casing, where the articulation pin is arranged in the vertical median plane.

The proposed assembly is more compact.

Advantageously, the pylon comprises a main body intended to be attached to the aircraft and having a lower face and a lower beam having an upper face fixed again the lower face, where the front face is on the lower beam, where the two central links are attached to the lower beam and where the two rear links are attached to the main body.

Advantageously, the lower beam is mounted in cantilever.

Advantageously, the fixation of the lower beam to the main body is realized thanks to vertical tension bolts.

Advantageously, the assembly comprises in the vertical median plane, two shear pins each being arranged in a first bore of the lower beam and a second bore of the main body. According to an embodiment, the articulation of the first end of each central link is a rotation around a pivot axis perpendicular to the vertical median plane.

According to another embodiment, the articulation of the first end of each central link is a rotation around a pivot axis parallel to a longitudinal axis of the motor casing. Advantageously, the articulation pin is retractable in the pylon.

Advantageously, the assembly comprises a front fail safe arrangement comprising, in the vertical median plane and attached to the pylon, a male clevis with a first hole and on both sides of the male clevis and formed in the motor casing, a female clevis with a second hole, and a fixation shaft arranged in the first hole and the second hole, where the diameter of the fixation shaft is smaller than at least one of the first hole and the second hole and where the axis of the fixation shaft is perpendicular to the vertical median plane.

Advantageously, the assembly comprises a central fail safe arrangement comprising, in the vertical median plane and attached to the pylon, a male clevis with a first hole and on both sides of the male clevis and formed in the motor casing, a female clevis with a second hole, and a fixation shaft arranged in the first hole and the second hole, where the diameter of the fixation shaft is smaller than at least one of the first hole and the second hole and where the axis of the fixation shaft is in the vertical median plane.

The invention proposes also an aircraft comprising an assembly according to any one of the preceding embodiments.

### BRIEF DESCRIPTION OF THE DRAWINGS

The characteristics of the invention will emerge more clearly from a reading of the following description of at least one example of embodiment, said description being produced with reference to the accompanying drawings, among which:
- Fig. 1 is a side view of an aircraft comprising an assembly according to the invention,
- Fig. 2 is a side view of the assembly of the invention,
- Fig. 3 is a cut view according to line III-III of Fig. 2 of the assembly according to a first embodiment of the invention,
- Fig. 4 is a view according to the arrow IV of the Fig. 2,
- Fig. 5 is a view according to the arrow V of the Fig. 4, and
- Fig. 6 is a cut view according to line III-III of Fig. 2 of the assembly according to a second embodiment of the invention.

### DETAILED DESCRIPTION OF AT LEAST ONE EMBODIMENT

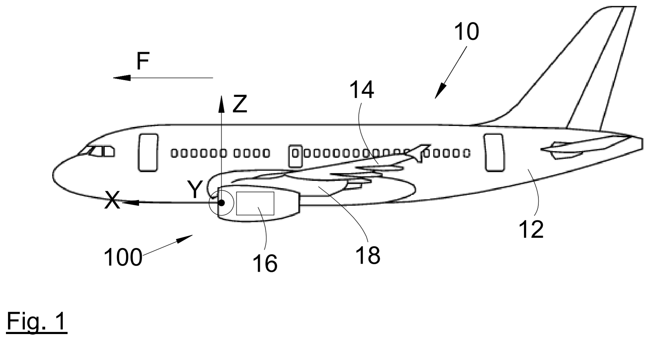

In the following description, terms relating to a position are taken with reference to an aircraft 10 in forward position, i.e. as shown in Fig. 1.

Fig. 1 shows an aircraft 10 that has a fuselage 12 on each side of which is attached a wing 14. Each wing 14 supports at least one engine comprising a motor casing 16, for example the fan casing, which is attached to the wing 14 via a pylon 18.

In the following description, and by convention, X is called the longitudinal axis of the engine oriented positively in the direction of advance of the aircraft 10, it is called Y, the transverse axis of the engine which is horizontal when the aircraft is on the ground, and Z, the vertical axis or vertical height when the aircraft is on the ground, these three axes X, Y and Z being mutually orthogonal. The fore and aft positions are taken in relation to the forward and aft of the aircraft 10. The direction of advancement of aircraft 10 is given by the arrow F which shows the direction in which aircraft 10 advances when engines are running. The engine has a vertical median plane P (XZ).

Between pylon 18 and the motor casing 16, the aircraft 10 has an engine attachment system that includes an engine mount.

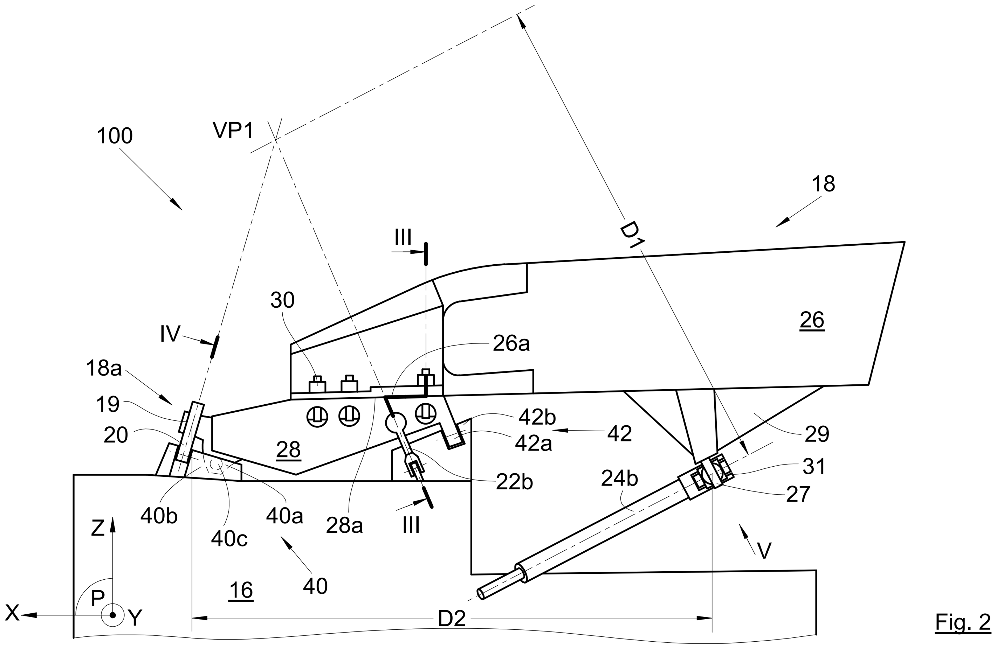

The engine mount, the pylon 18 and the motor casing 16 together form an assembly 100 according to the invention. The assembly 100 shares with engine the vertical median plane P. The Figs. 2 to 6 show different views of the assembly 100.

The pylon 18 has a front face 18a oriented towards the front.

The assembly 100 comprises a front link 20 which is mounted articulated on the front face 18a by a central articulation point 20a arranged in the vertical median plane P. The central articulation point 20a is realized by a nose 19 of the pylon 18 which is oriented towards the front of the plane 10.

The front link 20 is mounted articulated on the motor casing 16 by two lateral articulation points 20b-c which are arranged on both sides of the vertical median plane P. In the present embodiment, each lateral articulation point 20b-c takes the form of a clevis joint with a female clevis of the motor casing 16, a male clevis realized by the front link 20 and an axle joining the female clevis and the male clevis.

The axis of each articulation point 20a-c is globally parallel to the longitudinal axis X.

The front link 20 transmits two degrees of freedom.

The assembly 100 comprises also two central links 22a-b which are located behind the front link 20. The two central links 22a-b are arranged on both sides of the vertical median plane P and each comprises a first end mounted articulated on the pylon 18 and a second end mounted articulated on the motor casing 16.

As previously, in the present embodiment, the second end of each central link 22a-b is attached to the motor casing 16 through a clevis joint where the axis is globally parallel to the longitudinal axis X.

The assembly 100 comprises also two rear links 24a-b which are located behind two central links 22a-b. The two rear links 24a-b are arranged on both sides of the vertical median plane P and each comprises a first end mounted articulated at a same articulation pin 27 of the pylon 18 and a second end mounted articulated on the motor casing 16, here through a rear lower fitting 29 integral with the pylon 18.

The first ends and said same articulation pin 27 are arranged in the vertical median plane P and the second ends are arranged on both sides of the vertical median plane P. The two rear links 24a-b transmit two degrees of freedom.

With such arrangement, the assembly is compact as all parts may be located inside a nacelle profile surrounding the motor casing. The inertia of the beam perfectly exploits the free volume available under the engine nacelle lines. In addition, the load reduction induced by the link arrangement helps minimize the size of the structural elements.

The present invention reduces complexity of pylon and mounts integration and their weight while retaining all the advantages of a statically determined architecture.

In the present embodiment, the pylon 18 comprises a main body 26 and a lower beam 28 which are fixed together. The main body 26 is attached to the aircraft 10, in particular to the wing structure and it has a lower face 26a which is horizontal (parallel to plane XY).

The lower beam 28 has an upper face 28a also horizontal.

The lower beam 28 is under the lower face 26a of the main body 26 and the two faces 26a and 28a are in contact. The lower beam 28 is fixed again the lower face 26a through its upper face 28a.

The front face 18a is on the lower beam 28 and the two central links 22a-b are attached to the lower beam 28. The two rear links 24a-b are attached to the main body 26.

Here the lower beam 28 is mounted in cantilever in relation to the main body 26.

The lower beam 28 is fixed to the main body 26 thanks to vertical tension bolts 30. There are vertical tension bolts 30 on both sides of the vertical median plane P.

The lower beam 28 is in a very forward position, thus diverting loads from the motor casing 16 to the pylon 18, while providing an accessible position for the tension bolts 30 at the pylon interface that can be tightened/removed from the rear.

The separation of the pylon 18 in two parts allows a functional separation of the structures. The lower beam 28 supports the loads of the front links 20 and central links 22a-b, while the main body 26 provides the main connection with the aircraft structure and takes over the loads of the rear links 24a-b. This modular arrangement allows independent optimization of each component for increased weight savings and structural efficiency.

Here, the lower beam 28 is designed trapezoidal, offering an optimized capacity and weight thanks to a largest inertia where the moment is maximum.

To ensure the transmission of the lateral loads between the lower beam 28 and the main body 26, the assembly 100 comprises in the vertical median plane P, two shear pins 44. The shear pins 44 are aligned one behind the other and each shear pin 44 is arranged in a first bore 44a of the lower beam 28 and a second bore 44b of the main body 26.

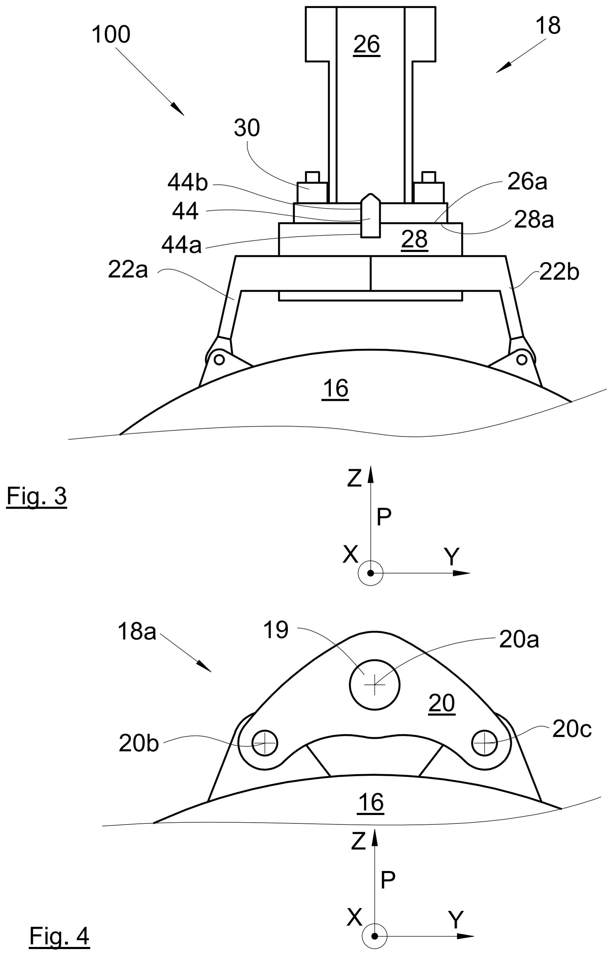

In the embodiment of Fig. 3, the articulation of the first end of each central link 22a-b is a rotation around a pivot axis perpendicular to the vertical median plane P. Here, the first end of each central link 22a-b takes the form of a cylinder inserted in a cylindrical hole of the pylon 18, and particularly of the lower beam 28. This arrangement provides a two-degree-of-freedom load path in a very compact manner, as it allows vertical loads to be transferred at a reduced height.

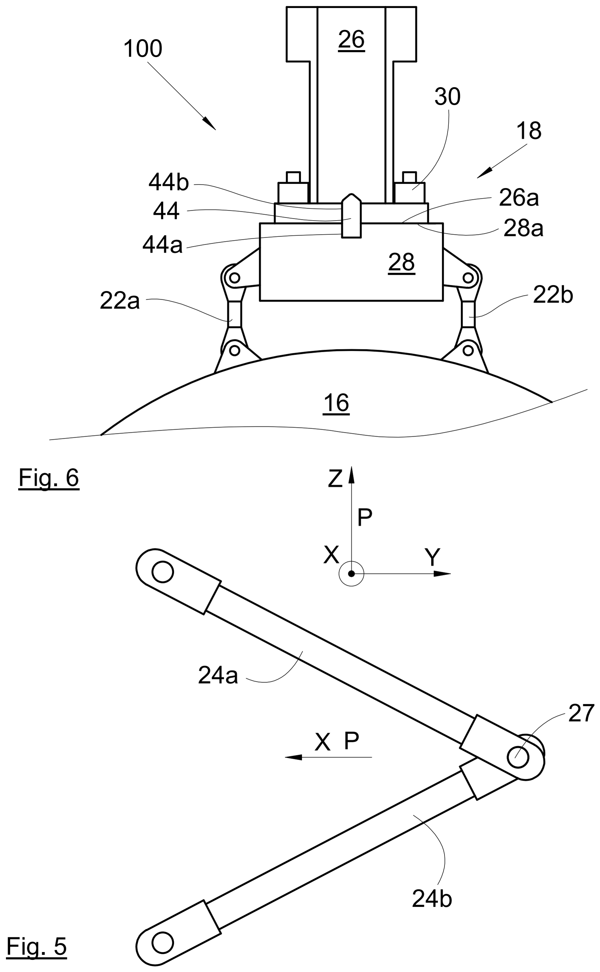

In the embodiment of Fig. 6, the articulation of the first end of each central link 22a-b is a rotation around a pivot axis parallel to the longitudinal axis X of the motor casing 16. Here, the first end of each central link 22a-b is attached to the pylon 18, here the lower beam 28, through a clevis joint where the axis is globally parallel to the longitudinal axis X.

The two rear links 24a-b converge at the same point materialized by the articulation pin 27. The second end is attached to the motor casing 16 for example through a clevis joint not represented on Fig. 2.

To ease rear links 24a-b mounting and dismounting, the articulation pin 27 is retractable inside the pylon 18 and especially here in the rear lower fitting 29. The articulation pin 27 can be displaced between a deployed position in which it emerges from the pylon 18 and a retracted position in which it is stowed in the pylon 18. The displacement of the articulation pin 27 is realized thanks to a handle not represented and attached to the articulation pin 27 to move it.

The two rear links 24a-b converge on a single ball bearing 31 pressed onto the articulation pin 27 in order to minimize the weight and the secondary moment introduced in the pylon 18.

In the embodiment of Fig. 3, the lines of action of the central links 22a-b are not parallel and converge at a virtual point VP 1 located at a great distance D1 above the plane of the rear links 24a-b. The line of action of the front link 20 at the central articulation point 20a converges also at the virtual point VP1. This arrangement ensures low vertical loads (My).

In the embodiment of Fig. 6, the lines of action of the central links 22a-b are parallel to ensure a resumption of the load Mx.

At the same time, the large distance D2 between the central articulation point 20a of the front link 20 and the articulation pin 27 allows for low lateral loads (Mz).

A main transfer path is created between the different elements described above.

To ensure the transfer of the loads in case of failure of the main transfer path, especially at the front link 20, the assembly 100 comprises a front fail safe arrangement 40.

The front fail safe arrangement 40 comprises, in the vertical median plane P and attached to the pylon 18, a male clevis 40a with a first hole and on both sides of the male clevis 40a and formed in the motor casing 16, a female clevis 40b with a second hole, and a fixation shaft 40c arranged in the first hole and the second hole. The diameter of the fixation shaft 40c is smaller than at least one of the first hole and the second hole and the axis of the fixation shaft 40c is perpendicular to the vertical median plane P.

To ensure the transfer of the loads in case of failure of the main transfer path, especially at the central links 22a-b, the assembly 100 comprises a central fail safe arrangement 42.

The central fail safe arrangement 42 comprises, in the vertical median plane P and attached to the pylon 18, here to the lower beam 28, a male clevis 42a with a first hole and on both sides of the male clevis 42a and formed in the motor casing 16, a female clevis 42b with a second hole, and a fixation shaft arranged in the first hole and the second hole. The diameter of the fixation shaft is smaller than at least one of the first hole and the second hole and the axis of the fixation shaft is in the vertical median plane P.

The difference in diameter between the fixation shafts 40c and the holes creates a running clearance. This set defines a 'waiting fail-safe' type security system that only comes into contact and takes up the loads in case of a break in the main transfer path, thus not interfering with the nominal kinematics of the assembly.

## Claims

1. Assembly (100) for aircraft (10), said assembly (100) having a vertical median plane (P) and comprising:
- a pylon (18) having a front face (18a),
- a motor casing (16),
- a front link (20) where the front link (20) is mounted articulated on the front face (18a) by a central articulation point (20a) arranged in the vertical median plane (P), and where the front link (20) is mounted articulated on the motor casing (16) by two lateral articulation points (20b-c) arranged on both sides of the vertical median plane (P),
- two central links (22a-b) arranged on both sides of the vertical median plane (P) and each comprising a first end mounted articulated on the pylon (18) and a second end mounted articulated on the motor casing (16), and
- two rear links (24a-b) arranged on both sides of the vertical median plane (P) and each comprising a first end mounted articulated at a same articulation pin (27) of the pylon (18) and a second end mounted articulated on the motor casing (16), where the articulation pin (27) is arranged in the vertical median plane (P).

2. Assembly (100) according to claim 1, **characterized in that** the pylon (18) comprises a main body (26) intended to be attached to the aircraft (10) and having a lower face (26a) and a lower beam (28) having an upper face (28a) fixed again the lower face (26a), where the front face (18a) is on the lower beam (28), where the two central links (22a-b) are attached to the lower beam (28) and where the two rear links (24a-b) are attached to the main body (26).

3. Assembly (100) according to claim 2, **characterized in that** the lower beam (28) is mounted in cantilever.

4. Assembly (100) to any one of claims 2 to 3, **characterized in that** the fixation of the lower beam (28) to the main body (26) is realized thanks to vertical tension bolts (30).

5. Assembly (100) to any one of claims 2 to 4, **characterized in that** it comprises in the vertical median plane (P), two shear pins (44) each being arranged in a first bore of the lower beam (28) and a second bore of the main body (26).

6. Assembly (100) to any one of claims 1 to 5, **characterized in that** the articulation of the first end of each central link (22a-b) is a rotation around a pivot axis perpendicular to the vertical median plane (P).

7. Assembly (100) to any one of claims 1 to 5, **characterized in that** the articulation of the first end of each central link (22a-b) is a rotation around a pivot axis parallel to a longitudinal axis of the motor casing (16).

8. Assembly (100) to any one of claims 1 to 7, **characterized in that** the articulation pin (27) is retractable in the pylon (16).

9. Assembly (100) to any one of claims 1 to 8, **characterized in that** it comprises a front fail safe arrangement (40) comprising, in the vertical median plane (P) and attached to the pylon (18), a male clevis with a first hole and on both sides of the male clevis and formed in the motor casing (16), a female clevis with a second hole, and a fixation shaft arranged in the first hole and the second hole, where the diameter of the fixation shaft is smaller than at least one of the first hole and the second hole and where the axis of the fixation shaft is perpendicular to the vertical median plane (P).

10. Assembly (100) to any one of claims 1 to 9, **characterized in that** it comprises a central fail safe arrangement (42) comprising, in the vertical median plane (P) and attached to the pylon (18), a male clevis with a first hole and on both sides of the male clevis and formed in the motor casing (16), a female clevis with a second hole, and a fixation shaft arranged in the first hole and the second hole, where the diameter of the fixation shaft is smaller than at least one of the first hole and the second hole and where the axis of the fixation shaft is in the vertical median plane (P).

11. Aircraft (10) comprising an assembly (100) according to any one of the preceding claims.
